# EUROPÄISCHE PATENTSCHRIFT

(11) **EP 3 747 532 B1**
(45) Veröffentlichungstag und Bekanntmachung des Hinweises auf die Patenterteilung: **24.12.2025**
(21) Anmeldenummer: 20172956.3
(22) Anmeldetag: 05.05.2020
(51) Int. Cl.: B01D 53/22, F16K 24/04, F24D 19/08

(54) **MEMBRAN-GASABSCHEIDER**
MEMBRANE GAS SEPARATOR
SÉPARATEUR DE GAZ À MEMBRANE

(30) Priorität: 03.06.2019 DE 102019114751
(43) Veröffentlichungstag der Anmeldung: 09.12.2020
(73) Patentinhaber: Vaillant GmbH, 42859 Remscheid (DE)
(72) Erfinder: Wohlfeil, Arnold, 42799 Leichlingen (DE)
(74) Vertreter: Popp, Carsten

(56) Entgegenhaltungen:
- WO-A1-90/15662
- DE-A1- 102006 021 454
- DE-A1- 102011 120 002
- DE-T5- 112004 000 175
- US-A1- 2007 175 514

## Beschreibung

Die Erfindung betrifft die Abscheidung entzündlicher Gase in einem Heizungskreislauf oder Kühlsolekreislauf. Es ist bekannt, dass Heizkreisläufe gelegentlich entlüftet werden müssen, da sich Luft im System ansammeln kann. Meist geschieht dies durch Undichtigkeiten an erhöhten Stellen im Heizkreislauf, bei denen eine Undichtigkeit in Verbindung mit Unterdruck zum Ansaugen von Luft in den Wasserkreislauf führt. In manchen Fällen handelt es sich auch um Luft, die in Nachfüllwasser gelöst ist und die bei dessen Erwärmung freigesetzt wird. Dasselbe gilt für Sole-Split-Anlagen, bei denen sich Sole im Heizkreis befindet.

Befindet sich Luft im System, führt dies oftmals zu Funktionsstörungen und Schäden an Anlagenkomponenten durch Korrosionsprozesse. Gerade Bauteile mit Verschleißteilen wie zum Beispiel Umwälzpumpen sind hiervon betroffen. Außerdem werden Umwälzabläufe durch etwaige Luftpolster behindert und die Wärmeverteilung an sich gestört oder sogar unterbrochen. Verbunden sind die Fehlfunktionen dabei oftmals mit Fließ- und Kavitationsgeräuschen. Gebräuchlich sind daher Entlüfter, mit denen solche Luft aus dem System entfernt werden kann. Problematisch werden solche Entlüfter dann, wenn sich nicht nur Luft im System befindet.

In neueren Kältekreisen, zum Beispiel in Wärmepumpen, werden keine Sicherheitskältemittel mehr verwendet, sondern entzündliche natürliche Arbeitsfluide wie z.B. R290 und R1270. Deren Arbeitsdruck ist sowohl auf der Wärme aufnehmenden Seite als auch auf der Wärme abgebenden Seite regelmäßig höher als der übliche Druck in Heizkreisläufen. Je nach Schaltung und Betriebsweise können Leckagen im Kondensator oder Verdampfer daher zum Austritt von gasförmigem brennbarem Arbeitsfluid aus dem Kältekreis in den Heiz- oder Solekreislauf führen. Dies würde nachfolgend beim Entlüften dazu führen, dass ein zündfähiges Gemisch austreten könnte. Das darf aus Sicherheitsgründen keinesfalls geschehen. Dasselbe gilt natürlich auch für herkömmliche, brennbare Kältemittel wie z.B. R32, sofern solche noch zur Anwendung gelangen.

Im Stand der Technik verhindert man dies durch Verwendung von doppelwandigen Edelstahl-Wärmetauschern als Kondensatoren und Verdampfer. Im Falle einer Leckage tritt das brennbare Arbeitsfluid in den Zwischenraum der beiden Wandungen ein und wird dort separat abgesaugt und einer Nachbehandlung unterworfen. Diese Nachbehandlung kann auch entfallen, wenn es einen sicheren Weg in die Atmosphäre gibt, bei dem eine Vermischung mit Luft in einer Menge erfolgt, dass sich ein zündfähiges Gemisch nicht bilden kann. Der Zwischenraum beträgt dabei meist nur wenige Zehntelmillimeter. Diese Bauformen sind aber einerseits teuer und andererseits behindern sie den Wärmeübergang, weil der Zwischenraum wie eine Wärmedämmung wirkt, sie verringern also den erreichbaren Wirkungsgrad. Im Übrigen können Leckagen auch beide Wände betreffen. Aus diesen Gründen setzt die Erfindungen bei den Entlüftern an.

Unterscheiden muss man dabei zwischen manuellen und automatischen Entlüftern, die auch als Schnellentlüfter bezeichnet werden. Manuell funktioniert ein Entlüftungsvorgang dabei über Entlüfterhähne. Hierbei handelt es sich lediglich um einen Zapfhahn, der je nach Bedarf geöffnet und wieder geschlossen wird, sobald das sich im System befindliche Gas, in der Regel Luft, vollständig entwichen ist. Man kann aber auch per Schnellentlüfter das System automatisch entlüften. Schnellentlüfter gibt es in den verschiedensten Bauformen.

Die DE 10 2006 015 263 A1 beschreibt ein automatisches Entlüftungsventil mit einer Membran, die durchlässig ist für gasförmige Medien. Der Membranwerkstoff ist aus Kunststoff, etwa PTFE oder PP, ist oleophobisch und/oder hydrophobisch und nicht benetzbar bei kleinsten Oberflächenspannungen. Gegenüber Flüssigkeiten ist der Membranwerkstoff nicht durchlässig und hält, je nach Bauart, den hohen Drücken einer Heizungsanlage stand. Die Membran kann entweder als poröser Ring ausgeführt sein, der radial durchströmt wird, oder als Scheibe, die axial durchströmt wird. Bezüglich der sonstigen Bauformen wird auf den umfangreichen, in der DE 10 2006 015 263 A1 vorgestellten Stand der Technik verwiesen.

Die DE 10 2009 048 402 A1 und die DE 10 2010 024 107 A1 beschreiben Weiterentwicklungen von Entlüftungsautomaten als Systembaukasten. Die DE 10 2006 021 454 A1 beschreibt eine gegenüber der 10 2006 015 263 A1 verbesserte Ausführungsform, die auch einen Schwimmer enthält. Weitere bekannte Ausführungen betreffen das Einfangen von feinen Gasblasen mittels Bürsten oder Pallringen, oder auch sonstigen Packungen und Schüttungen im Strömungsweg, die zur Koagulation und zur besseren Abscheidung aus dem flüssigen Medium führen.

Automatische Entlüfter ohne Schwimmer bestehen üblicherweise aus einem Oberteil, einem Mittelteil und einem Unterteil, wobei letzteres die Anschlüsse an den Wasserkreislauf aufweist. Das Mittelteil weist eine Aufnahme für eine Membranbaugruppe zum Unterteil hin auf und eine Verbindung für Gas zum Oberteil auf. Das entweichende Gas aus dem Wasserkreislauf gelangt von unten in die wasserundurchlässige Rohrmembran, tritt durch sie hindurch, und gelangt über eine Lochscheibe nach außen.

Die Funktionsweise der automatischen Entlüfter mit Schwimmer ist dabei wie folgt: Wird Flüssigkeit durch das System geleitet bzw. gepumpt, wird bereits beim Anfahren das vorhandene Gas vom Strömungsdruck in den Entlüfter gedrückt. Die Schwimmerkugel bleibt bei diesem Vorgang erst einmal in der unteren Position. Dadurch öffnet sich das Ventil vollständig, sodass angesammelte Luft entweichen kann. Hat der Schnellentlüfter die Entlüftung beim Anfahren des Systems abgeschlossen, fließt Flüssigkeit in den jeweiligen Entlüfter. Mit dem ansteigenden Flüssigkeitspegel verändert sich auch die entsprechende Position des Schwimmers weiter nach oben und das Entlüftungsventil wird geschlossen. Kommt es dann zu erneuten Luftansammlungen, fallen auch Flüssigkeitspegel sowie Schwimmer wieder. Dies hat zur Folge, dass sich das Ventil wieder öffnet, um die Luft aus dem System zu entfernen. Wenn dann wieder Flüssigkeit nachfließt, steigt der Schwimmer und schließt somit das Ventil. Eine Membran ist hierfür nicht erforderlich.

Schwimmer und Membran können auch zusammen genutzt werden. Die Entlüftung erfolgt dabei über eine Membran, während der Schwimmer eine Sicherung gegenüber einem Systemüberdruck absichert, wie er beispielsweise bei einer Druckprüfung anliegt, wie die DE 20 2018 003 488 U1 zeigt.

DE 10 2011 120 002 A offenbart einen Schnellentlüfter mit Membran für Luftabscheider für die Heizungstechnik.

Die bekannten Membranen für Entlüfter lassen jedoch sowohl Luft als auch Propangas durch, die Bildung eines entzündlichen Gemischs nach der Passage der Membran kann so nicht verhindert werden. Es sind auch keine Membranen bekannt geworden, die diesbezüglich selektiv gegenüber den einzelnen Gaskomponenten sind, wenn diese aus einer Flüssigkeit heraus abgeschieden werden sollen.

Es ist jedoch möglich, gasförmiges Propan von Luftbestandteilen durch eine Membran zu trennen. Die DE 600 32 610 T2 beschreibt ein Verfahren zur Herstellung einer solchen Membran und zeigt in Beispiel 5, Abschnitt [0051] auf Seite 33, wie mittels einer solchen Membran eine Gewinnung von Propan zu erreichen ist. Dies liegt unter anderem daran, dass die Arbeitsdurchmesser der leichten Gase wie Sauerstoff, Stickstoff, und Kohlendioxid kleiner als die von Propan sind.

Bekanntlich betragen die Arbeitsdurchmesser von Sauerstoff 3,46 Ångström, von Stickstoff 3,64 Ångström, von Kohlendioxid 3,3 Ångström, von Methan 3,8 Ångström und von Propan 4,3 Ångström. Andere entzündliche Bestandteile von R290. R600a oder R1270 weisen also immer Molekülgrößen von mehr als 3,7 Ångström auf und daher hält ein poröser Film mit einem Arbeitsdurchmesser von 3,7 Ångström Methan, Ethan, Propan, Isobutan und Butan zurück, während die anderen Luftkomponenten Sauerstoff und Stickstoff durchgelassen werden. Mit einer Porengröße von 3,5 Ångström kann der poröse Film für Sauerstoff durchlässig, für Stickstoff und Propan aber undurchlässig gestaltet werden. Auch dies würde die Bildung einer entzündlichen Gasmischung sicher verhindern, dafür aber die abzuführenden Gasmengen im Normalfall wegen des anfallenden Stickstoffs erhöhen.

Die Aufgabe der Erfindung ist es daher, einen Entlüfter zur Verfügung zu stellen, der gasförmige Luftbestandteile und gasförmige entzündliche Bestandteile aus dem Fluidumlauf eines Wärmeübertragungsmediums abscheidet und separat voneinander abgibt.

Die Erfindung löst diese Aufgabe durch einen Entlüfter für die Klima-Heizungs-Lüftungstechnik, aufweisend
- zwei Anschlüsse für einen Wasser-führenden Kreislauf,
- Mittel zum Abscheiden von Gasblasen und Trennung von Gasbestandteilen und Flüssigkeit unter Zurückhaltung der Flüssigkeit im Wasser-führenden Kreislauf, aus einer wässrigen Flüssigkeit,
- mindestens eine Kammer zur Sammlung von abgeschiedenen Gasbestandteilen,
- ferner einen Abzug für abgeschiedene Luftbestandteile, wobei
- im Strömungsweg des abzuscheidenden Gases zusätzlich eine Rückhaltemembran vorgesehen ist, deren Poren so beschaffen sind, dass Sauerstoffmoleküle passieren können, brennbare Gasbestandteile jedoch zurückgehalten werden,
- zwischen dem ersten Mittel, welches die Flüssigkeit vom Gasraum trennt, und der Rückhaltemembran eine weitere Kammer mit einem Gasabzug vorgesehen wird.

Ansonsten entspricht der Entlüfter bekannten Bauformen für manuelle und automatische Entlüfter mit oder ohne Schwimmer. Die Wirkweise der Erfindung ist dabei, dass zunächst das gesamte Gas, welches aus der wässrigen Lösung ausperlt, in der Kammer, die zwischen dem Mittel zum Abscheiden von Gasblasen und Trennung von Gasbestandteilen und Flüssigkeit gebildet wird, eingefangen wird und nachfolgend von dort zumindest ein großer Teil des Sauerstoffs durch eine Membran entfernt wird. Es ist dabei nicht erforderlich, dass der Sauerstoff vollständig entfernt wird, es ist völlig ausreichend, wenn die aus der Kammer abgezogene Gasmischung zwar als entzündliches, aber nicht mehr als explosives Gemisch vorliegt und wenn sichergestellt ist, dass keine entzündlichen Gasbestandteile über den Entlüfter beim bestimmungsgemäßen Entlüften ins Freie gelangen.

Es kommen zwei verschiedene Membranarten für die Gastrennung in der Rückhaltemembran alternativ zur Anwendung. Dies sind einerseits semipermeable Wände und andererseits größenselektive Membranen. Bei semipermeablen Wänden löst sich das Gas in der festen Wand und diffundiert durch sie hindurch. Gase, die sich nicht lösen, diffundieren nicht. Je nach Arbeitsfluid wählt man hierfür eine semipermeable Wand, in der sich Alkane nicht lösen können, im Gegensatz zu Sauerstoff und möglichst auch Stickstoff.

Bei größenselektiven Membranen, die üblicherweise aus dünnen Filmen aufgebaut sind, kommt es auf die Durchmesser an. Eine selektive Entfernung von Sauerstoff ist möglich, wenn der Porendurchmesser der Rückhaltemembran größer als 3,46 Ångström, aber kleiner als 3,64 Ångström dimensioniert wird, wobei mit dem Sauerstoff auch ausgasendes Kohlendioxid mitabgeschieden wird. In diesem Fall sammelt sich in der Kammer zwischen dem Mittel zur Abscheidung von Gasblasen und der Rückhaltemembran eine Mischung aus Stickstoff und entzündlichen Alkanen, je nach verwendetem Arbeitsfluid im Kältekreis, ferner eine geringe Menge an Sauerstoff, die dem Partial-Gegendruck der Atmosphäre entspricht.

Es ist aber auch möglich, die Rückhaltemembran so zu gestalten, dass Stickstoff ebenfalls durch die zweite Membran hindurch abgeführt wird, indem die Porengröße kleiner als 3,8 Ångström dimensioniert wird. Dadurch werden alle entzündlichen Bestandteile in der Kammer angereichert, während die Luftbestandteile alle durch die Rückhaltemembran entweichen, bis sich ein Partialdruck-Gleichgewicht mit der Atmosphäre einstellt. In diesem Fall kann für das aus der Kammer abgezogene Gas dieselbe Auffang- und Entsorgungsvorrichtung benutzt werden, die auch beim herkömmlichen Stand der Technik mit den Zwischenräumen der doppelwandigen Wärmetauscher verwendet wird. Dies kann beispielsweise eine Leitung ins Freie oder ein Aktivkohleadsorber sein.

Handelt es sich bei den entzündlichen Bestandteilen nicht um Methan oder Ethan, sondern um Propan und/oder Butan, kann auch eine Porenverteilung verwendet werden, deren größte Poren kleiner als 4,3 Ångström sind. Eine solche Membran mit einer Porenverteilung von 3,5 bis 4,3 Ångström ist fertigungstechnisch günstiger herzustellen, als eine mit einer engen Verteilung.

In einer Ausgestaltung der Erfindung wird vorgesehen, dass der Gasraum, den die Kammer und der Abzug gemeinsam bilden, mit einem Sensor für brennbares Gas ausgestattet ist. Auf diese Weise kann erkannt werden, wenn sich unbemerkt eine Leckage ereignet hat, worauf entzündliches Arbeitsfluid in das Heizungs- bzw. Kühlwasser gelangt ist. Weil es unlöslich ist, ist es dann in Form von Gasblasen bis zum Entlüfter gelangt, wurde dort gasförmig abgeschieden und ist dann in dessen Gasraum gelangt, den die Kammer und der Abzug des Entlüfters gemeinsam bilden. Da es keine weiteren Eintragsmöglichkeiten gibt, kann dies als sicheres Anzeichen für eine Leckage in einem der Wärmetauscher betrachtet werden und zur Einleitung entsprechender Maßnahmen, etwa der Außerbetriebnahme des Wasserkreislaufs, führen.

Der Durchtritt von Molekülen durch Poren erfordert einerseits eine ausreichende Durchtrittsfläche und andererseits eine Druckdifferenz der Partialdrücke. Bezüglich Sauerstoff bedeutet dies, dass der Sauerstoffpartialdruck der Atmosphäre auch zum Eintrag von Sauerstoff in die Kammer hinein führt, sofern der Druck in der Kammer nicht höher ist als der Umgebungsdruck. Es ist daher einerseits sinnvoll, den Entlüfter nicht am höchsten Punkt des Wasserkreislaufs anzuordnen, wie es derzeit die Regel ist, sondern am Punkt des höchsten Wasserdrucks in Strömungsrichtung nach dem von Arbeitsfluid durchströmten Wärmetauscher. Weiterhin ist es sinnvoll, die Kammer, in der das brennbare Gasgemisch gesammelt wird, unter erhöhtem Druck zu halten, indem der Gasabzug mit einem einstellbaren Druckhalteventil ausgestattet wird und der Druckabbau zur Umgebung erst in oder nach der zweiten Membran durchgeführt wird. Auf diese Weise wird ein ausreichender Abbau des Sauerstoffanteils im Abzug der Kammer erreicht und die Zündgrenzen der zur Nachbehandlung abgezogenen Gasmischung werden sicher unterschritten.

Die Anordnung der beiden Membranflächen kann dabei nach bekanntem Stand der Technik erfolgen, also entweder in Rohr- bzw. Ringform, wobei das Gas radial durchtritt, als auch in Scheibenform, bei dem das Gas axial durchtritt. Aufgrund der Druckverhältnisse kann es daher sinnvoll sein, dass die erste Membran zwischen Flüssigkeit und Kammer scheibenförmig ist, da sie nur geringe Druckdifferenzen aushalten muss, und die zweite Membran als Ringmembran ausgeführt ist und über eine Unterstützungsstruktur verfügt. Ebenso möglich ist eine Konstruktion aus zwei konzentrischen Rohren, zwei parallelen Scheiben oder anderen Bauarten.

Die Erfindung wird nachfolgend anhand von drei Prinzipskizzen näher erläutert. Hierbei zeigen:
Fig. 1 einen Membranabscheider für entzündliches Gas,
Fig. 2 einen Entlüfter ohne Schwimmer mit Membranabscheider,
Fig. 3 einen Entlüfter mit Schwimmer und Membranabscheider.

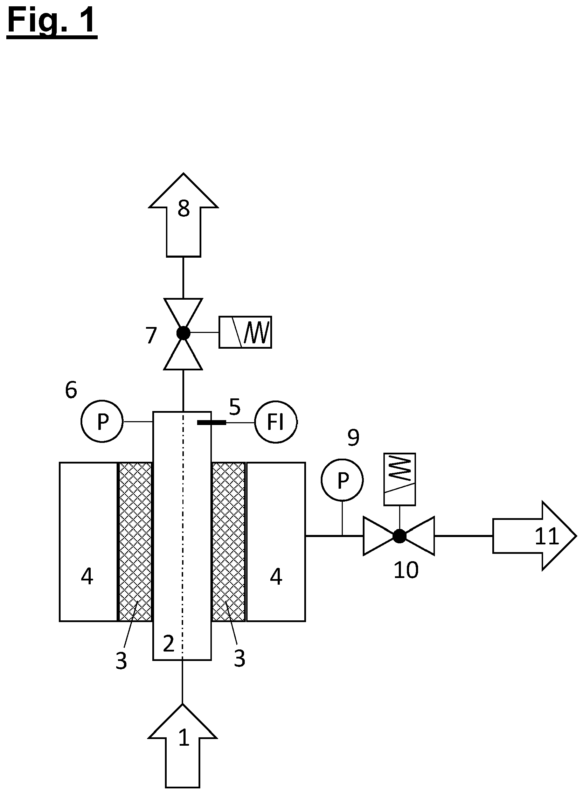

Fig. 1 zeigt einen Membranabscheider für entzündliches Gas als Modul, welches in dieser Form als Aufsatz auf einen automatschen Entlüfter herkömmlicher Bauweise angeschlossen oder in ihn integriert werden kann. Die Gasmischung 1, die aus einem automatischen oder manuellen Entlüfter kommt, besteht im Normalfall aus Luft, im Leckagefall enthält sie aber auch entzündliche Bestandteile. Sofern der Wasserkreislauf an einen Kältekreis angeschlossen ist, der mit dem Kältemittel R290 betrieben wird, ist dies beispielsweise Propan. Bei Verwendung von R600a oder R1270 können dies auch andere Alkane oder Alkene sein.

Die Gasmischung tritt in die runde innere Kammer 2 ein, die außen durch die Rückhaltemembran 3 ringförmig umschlossen ist. Die Rückhaltemembran 3 hat hierbei einen Porendurchmesser von 4 Ångström und ist durchlässig für Sauerstoff, Stickstoff und Kohlendioxid, nicht jedoch für Propan und höhere Kohlenwasserstoffe. Aufgrund der Druckdifferenz ist sie in zwei Schichten aufgebaut. Auf der Innenseite hat sie einen Film, dessen Poren die brennbaren Gasbestandteile zurückhält, dahinter weist sie ein Stützgerüst auf, welches die Kräfte aufgrund der Druckdifferenz aufnehmen kann.

Im Normalfall tritt das gesamte Gas, sofern es nur aus entgasender Luft besteht, durch die Rückhaltemembran 3 hindurch in die äußere Kammer 4, die unter Druck gehalten wird. Im Leckagefall verbleibt jedoch auch ein Teil des Gases in der inneren Kammer 2, in diesem Fall zeigt der Gassensor 5 an, dass sich entzündliches Gas in der inneren Kammer 2 ansammelt. Dies bewirkt einerseits einen Alarm, andererseits wird ein Teil des Gases aus der inneren Kammer 2 abgelassen, wobei der Druck mittels der Druckmessung 6 beobachtet wird. Das Druckhalteventil 7 sorgt hierbei dafür, dass der Druck beim Ablassen nicht zu stark absinkt, das noch unter Druck befindliche entzündliche Gas 8 wird einer üblichen Nachbehandlung unterzogen.

Die entgasende Luft wird in der äußeren Kammer 4 unter einem Druck gehalten, der kleiner ist als der Druck der inneren Kammer, wobei die Druckdifferenz als treibende Kraft für den Transport durch die Rückhaltemembran dient. Die Druckdifferenz darf aber nicht zu hoch werden, um die empfindliche Rückhaltemembran nicht zu beschädigen und sie muss groß genug sein, damit der Sauerstoff-Gegendruck nicht bewirkt, dass zuviel Sauerstoff in der inneren Kammer 2 verbleibt. Der Druck in der äußeren Kammer wird durch die Druckmessung 9 gemessen und mittels des einstellbaren Druckhalteventils 10 den Verhältnissen entsprechend eingestellt. Die entgasende Luft 11 wird danach abgelassen.

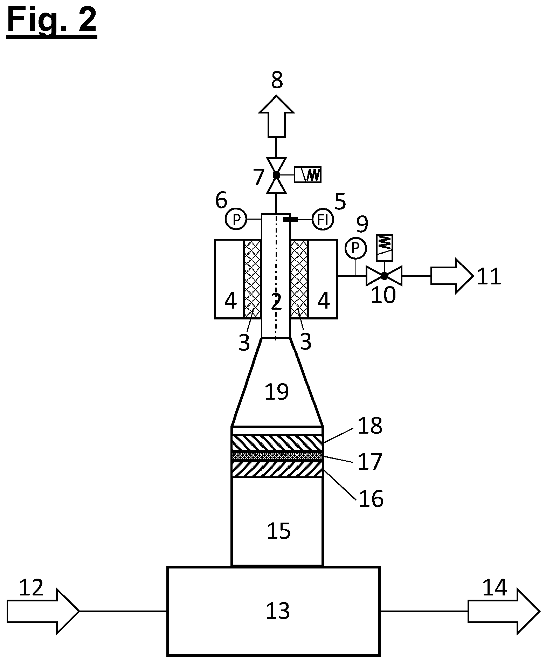

Fig. 2 zeigt einen Entlüfter ohne Schwimmer mit Membranabscheider. Der Entlüfter besteht aus einem Wasserzulauf 12, einem daran angeschlossenen Unterteil 13, in dem die Abscheidung der Gasblasen aus der Wasserströmung nach bekannten Mitteln erfolgt, einem daran angeschlossenen Wasserablauf 14, einem Mittelteil 15, in dem sich Wasser und Gas befinden, einer wasserundurchlässigen Membran 17, die von Stützscheiben 16 und 18 an seiner Unter- und Oberseite festgehalten wird, und einem Oberteil 19, an dem der Membranabscheider mit der Rückhaltemembran angeschlossen ist.

Wenn Gasblasen im Wasser in das Unterteil 13 eintreffen, werden diese koaguliert, z.B. mittels Pallringen oder Bürsten oder ähnlichen Mitteln, und steigen dann in das Mittelteil 15 auf, wo sie das Wasser, welches an der wasserundurchlässigen Membran anliegt, verdrängen. Daraufhin kann das Gas durch die wasserundurchlässige Membran hindurchtreten und gelangt in das Oberteil 19 und von da aus in die innere Kammer 2 des Membranabscheiders. Das Weitere entspricht dem in Fig. 1 Beschriebenen. Sobald der Wasserstand im Mittelteil 15 die wasserundurchlässige Membran 17 wieder erreicht hat, beginnt der Zyklus wieder von vorn.

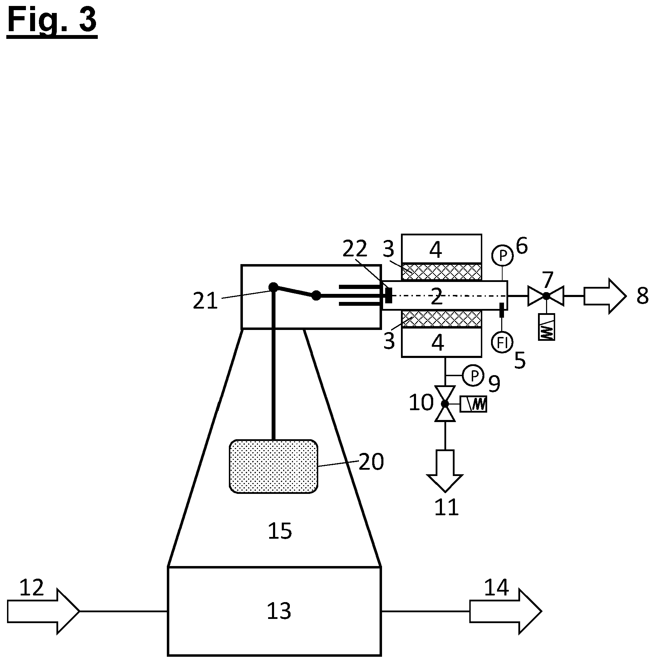

Fig. 3 zeigt einen Entlüfter mit Schwimmer und Membranabscheider. Anstatt einer wasserundurchlässigen Membran erfolgt die Trennung von Wasser und Gas durch einen Schwimmer 20 im Mittelteil 15. Zu Beginn wird der Schwimmer durch den Wasserdruck nach oben gedrückt und der Hebelmechanismus 21 bewirkt, dass das Ventil 22 dicht schließt. Sobald sich Gas im Mittelteil ansammelt, wird der Schwimmer entsprechend dem sinkenden Wasserstand nach unten gedrückt und der Hebelmechanismus 21 öffnet das Ventil 22. Das Gas kann daraufhin in die innere Kammer 2 des Membranabscheiders strömen, das Weitere entspricht dem in Fig. 1 und Fig. 2 Beschriebenen.

### Bezugszeichenliste

- 1: Gasmischung
- 2: Innere Kammer
- 3: Rückhaltemembran
- 4: Äußere Kammer
- 5: Gassensor
- 6: Druckmessung
- 7: Druckhalteventil
- 8: Entzündliches Gas
- 9: Druckmessung
- 10: Druckhalteventil
- 11: Entgasende Luft
- 12: Wasserzulauf
- 13: Unterteil
- 14: Wasserablauf
- 15: Mittelteil
- 16: Stützscheibe
- 17: Wasserundurchlässige Membran
- 18: Stützscheibe
- 19: Oberteil
- 20: Schwimmer
- 21: Hebelmechanismus
- 22: Ventil

## Patentansprüche

1. Entlüfter für die Klima-Heizungs-Lüftungstechnik, aufinieisend
- zwei Anschlüsse (12, 14) für einen Wasser-führenden Kreislauf,
- Mittel zum Abscheiden von Gasblasen und Trennung (17, 20) von Gasbestandteilen und Flüssigkeit unter Zurückhaltung der Flüssigkeit im Wasser-führenden Kreislauf, aus einer wässrigen Flüssigkeit,
- mindestens eine Kammer (19) zur Sammlung von abgeschiedenen Gasbestandteilen,
- ferner mindestens einen Abzug (11) für abgeschiedene Luftbestandteile,
**dadurch gekennzeichnet, dass**
- im Strömungsweg des abzuscheidenden Gases zusätzlich eine Rückhaltemembran (3) vorgesehen ist, deren Poren so beschaffen sind, dass Sauerstoffmoleküle passieren können, brennbare Gasbestandteile jedoch zurückgehalten werden,
- zwischen dem Mittel, welches die Flüssigkeit vom Gasraum trennt, und der Rückhaltemembran (3) eine weitere Kammer (2) mit einem Gasabzug (8) vorgesehen wird.

2. Entlüfter nach Anspruch 1, **dadurch gekennzeichnet, dass** der Porendurchmesser der Rückhaltemembran (3) größer als 3,46 Ångström, aber kleiner als 4,3 Ångström gewählt wird.

3. Entlüfter nach Anspruch 1, **dadurch gekennzeichnet, dass** der Porendurchmesser der Rückhaltemembran (3) größer als 3,46 Ångström, aber kleiner als 3,8 Ångström gewählt wird..

4. Entlüfter nach Anspruch 1, **dadurch gekennzeichnet, dass** der Porendurchmesser der Rückhaltemembran (3) größer als 3,46 Ångström, aber kleiner als 3,64 Ångström gewählt wird.

5. Entlüfter nach einem der Ansprüche 1 bis 4, **dadurch gekennzeichnet, dass** der Gasraum (2), den die Kammer und der Abzug (8) gemeinsam bilden, mit einem Sensor (5) für brennbares Gas ausgestattet ist.

6. Entlüfter nach einem der Ansprüche 1 bis 5, **dadurch gekennzeichnet, dass** der Gasabzug (8) aus der Kammer (2) mit einem einstellbaren Druckhalteventil (7) ausgestattet ist.

7. Entlüfter nach einem der Ansprüche 1 bis 6, **dadurch gekennzeichnet, dass** die Rückhaltemembran (3) als Ringmembran ausgeführt ist.

8. Entlüfter nach einem der Ansprüche 1 bis 6, **dadurch gekennzeichnet, dass** die Rückhaltemembran (3) als Scheibenmembran ausgeführt ist.

## Claims

1. Vent for air conditioning, heating and ventilation technology, comprising
- two connections (12, 14) for a water-carrying circuit,
- means for separating gas bubbles and separating (17, 20) gas components and liquid from an aqueous liquid while retaining the liquid in the water-carrying circuit,
- at least one chamber (19) for collecting separated gas components,
- furthermore at least one outlet (11) for separated air components,
**characterised in that**
- a retention membrane (3) is additionally provided in the flow path of the gas to be separated, the pores of which are designed so that oxygen molecules can pass through but combustible gas components are retained,
- a further chamber (2) with a gas outlet (8) is provided between the means separating the liquid from the gas space and the retention membrane (3).

2. Vent according to claim 1, **characterised in that** the pore diameter of the retention membrane (3) is selected to be greater than 3.46 Ångström but less than 4.3 Ångström.

3. Vent according to claim 1, **characterised in that** the pore diameter of the retention membrane (3) is selected to be greater than 3.46 Ångström but less than 3.8 Ångström.

4. Vent according to claim 1, **characterised in that** the pore diameter of the retention membrane (3) is selected to be greater than 3.46 Ångström but less than 3.64 Ångström.

5. Vent according to one of claims 1 to 4, **characterised in that** the gas space (2) formed jointly by the chamber and the extractor (8) is equipped with a sensor (5) for combustible gas.

6. Vent according to one of claims 1 to 5, **characterised in that** the gas extractor (8) from the chamber (2) is equipped with an adjustable pressure maintenance valve (7).

7. Vent according to any one of claims 1 to 6, **characterised in that** the retaining membrane (3) is designed as a ring membrane.

8. Vent according to one of claims 1 to 6, **characterised in that** the retaining membrane (3) is designed as a disc membrane.

## Revendications

1. Purgeur pour la technique de climatisation, de chauffage et de ventilation, présentant
- deux raccords (12, 14) pour un circuit d'eau,
- des moyens d'isolation de bulles de gaz et de séparation (17, 20) de composants gazeux et de liquide tout en retenant le liquide dans le circuit d'eau, à partir d'un liquide aqueux,
- au moins une chambre (19) pour la collecte de composants gazeux séparés,
- au moins un extracteur (11) pour composants gazeux séparés,
**caractérisé en ce que**
- une membrane de retenue (3) supplémentaire est prévue dans la voie d'écoulement du gaz à isoler, dont les pores sont conçus de manière à laisser passer des molécules d'oxygène, mais à retenir des composants gazeux combustibles,
- entre le moyen, lequel sépare le liquide de l'espace de gaz, et la membrane de retenue (3), une chambre supplémentaire (2) est prévue avec un extracteur de gaz (8).

2. Purgeur selon la revendication 1, **caractérisé en ce que** le diamètre de pores de la membrane de retenue (3) est sélectionné supérieur à 3,46 angströms, mais inférieur à 4,3 angströms.

3. Purgeur selon la revendication 1, **caractérisé en ce que** le diamètre de pores de la membrane de retenue (3) est sélectionné supérieur à 3,46 angströms, mais inférieur à 3,8 angströms.

4. Purgeur selon la revendication 1, **caractérisé en ce que** le diamètre de pores de la membrane de retenue (3) est sélectionné supérieur à 3,46 angströms, mais inférieur à 3,64 angströms.

5. Purgeur selon l'une quelconque des revendications 1 à 4, **caractérisé en ce que** l'espace de gaz (2), que la chambre et l'extracteur (8) forment conjointement, est équipé d'un capteur (5) pour gaz combustible.

6. Purgeur selon l'une quelconque des revendications 1 à 5, **caractérisé en ce que** l'extracteur de gaz (8) de la chambre (2) est équipé d'une soupape de maintien de pression réglable (7).

7. Purgeur selon l'une quelconque des revendications 1 à 6, **caractérisé en ce que** la membrane de retenue (3) est conçue en tant que membrane annulaire.

8. Purgeur selon l'une quelconque des revendications 1 à 6, **caractérisé en ce que** la membrane de retenue (3) est conçue en tant que membrane à disque.
